# EUROPÄISCHE PATENTSCHRIFT

(11) **EP 2 018 529 B1**
(45) Veröffentlichungstag und Bekanntmachung des Hinweises auf die Patenterteilung: **29.07.2015**
(21) Anmeldenummer: 07722323.8
(22) Anmeldetag: 27.04.2007
(51) Int. Cl.: G01K 1/14

(54) **RASTBARER SENSOR**
LATCHABLE SENSOR
CAPTEUR ENCLIQUETABLE

(30) Priorität: 18.05.2006 DE 102006023438
(43) Veröffentlichungstag der Anmeldung: 28.01.2009
(73) Patentinhaber: EPCOS AG, 81669 München (DE)
(72) Erfinder: BARD, Oliver, 14612 Falkensee (DE); GRUNDMANN, Wolfgang, 16547 Birkenwerder (DE)
(74) Vertreter: Epping - Hermann - Fischer
(86) Internationale Anmeldenummer: PCT/DE2007/000766
(87) Internationale Veröffentlichungsnummer: WO 2007/134564

(56) Entgegenhaltungen:
- EP-A2- 0 727 850
- DE-A1-102005 003 293
- DE-U1- 8 232 239
- US-A1- 2004 211 875

## Beschreibung

Die Erfindung betrifft einen rastbaren Sensor zum Einrasten in die Ausnehmung eines Gehäuses.

Es sind Sensoren der eingangs genannten Art bekannt, bei denen Rastarme seitlich oder an einem Fußende des Sensors angeordnet sind. Mittels der Rastarme und gegebenenfalls anderer geeigneter Haltevorrichtungen werden derartige Sensoren in die Ausnehmung eines Gehäuses eingebracht und dort verrastet. Die Rastarme dienen also der sicheren Befestigung des Sensors in dem Gehäuse. Derartige Sensoren sind beispielsweise als Temperatursensoren ausgeführt. Temperatursensoren weisen an einem Ende des Sensorkörpers ein temperatursensitives Sensorelement auf, während am anderen Ende des Sensorkörpers eine elektrische Kontaktierungsvorrichtung vorgesehen ist, mittels der von außen herangeführte elektrische Leitungen elektrisch leitend mit dem Sensorelement verbunden werden können. Derartige Temperatursensoren lassen sich beispielsweise als Außentemperatursensoren, als Raumtemperatursensoren der Heizungs-, Lüftungs- und Klimatechnik in stationären Systemen (Gebäuden) oder in mobilen Systemen wie Kraftfahrzeugen einsetzen.

Aus der Druckschrift EP 0 727 850 A2 ist ein Gehäuse für ein elektrisches Bauelement bekannt, bei dem auf der Außenseite des Gehäusebodens Rastelemente mit seitlich abstehenden Rastfingern vorhanden sind. Mittels der Rastfinger ist das Gehäuse in Ausnehmungen einer Halteplatte fixierbar.

Aus der Druckschrift DE 82 32 239 U1 ist ein Gehäuse aus elastischem Kunststoff mit einem darin angeordneten elektrischen Bauelement bekannt. An das Gehäuse sind auf seiner Unterseite Rastelemente in Form von schräg nach außen stehenden, federnden Stegen angeformt, die mehrere nach außen weisende Rastfinger aufweisen. Die Halteflächen der Rastfinger können durch eine Öffnung von Halteplatten unterschiedlicher Dicke hintergreifen. Sowohl die Rastelemente als auch die Rastfinger sind elastisch verbiegbar.

Da die Gehäuse, in die derartige rastbare Sensoren eingesetzt werden sollen, häufig sehr unterschiedliche Wandstärken aufweisen, andererseits aber eine sichere und spielfreie Befestigung des Sensors in der Ausnehmung des Gehäuses erfolgen soll, besteht die Aufgabe der Erfindung darin, einen rastbaren Sensor zum Einrasten in die Ausnehmung des Gehäuses zu schaffen, mittels dem größere Unterschiede der Wandstärke des Gehäuses, in das der Sensor einrasten soll, auszugleichen sind und der dabei einfach und preiswert herstellbar ist.

Diese Aufgabe wird gelöst durch einen rastbaren Sensor mit den Merkmalen der unabhängigen Patentansprüche. Vorteilhafte Ausgestaltungen der Erfindung sind in den Unteransprüchen gekennzeichnet.

Die Erfindung zeichnet sich aus durch einen rastbaren Sensor zum Einrasten in die Ausnehmung eines Gehäuses, mit einem Sensorkörper, Rastelementen, die an dem Sensorkörper angeordnet sind, und sich in Richtung einer Längsachse über eine Länge erstrecken, wobei die Rastelemente Stufen aufweisen, und mindestens zwei Stufen in Richtung der Längsachse voneinander beabstandet angeordnet sind.

Die Rastelemente werden durch die Ausnehmung in dem Gehäuse gesteckt, wodurch der rastbare Sensor in dem Gehäuse verrastet ist. Die Stufen, die in Richtung der Längsachse, die die Erstreckungsrichtung der Rastelemente bildet, voneinander beabstandet angeordnet sind, ermöglichen es, Unterschiede in den Stärken von Wänden der Gehäuse auszugleichen, in die der Sensor eingeführt und in denen dieser arretiert werden soll. Abhängig von der Anzahl und den Abständen der Stufen zu einander ist es möglich, Unterschiede der Wandstärken verschiedener Gehäuse auszugleichen.

Es ist vorteilhaft, wenn mindestens zwei der Rastelemente verschiedene Längen aufweisen. Besonders vorteilhaft ist es, wenn jedes Rastelement mindestens eine Stufe aufweist. Durch die Ausbildung der Rastelemente verschiedener Länge, von denen jedes mindestens eine Stufe aufweist, ist es möglich, auch größere Wandstärkenunterschiede des Gehäuses in Abhängigkeit von der Länge der Rastelemente in einfacher Weise auszugleichen.

In einer weiteren vorteilhaften Ausführungsform der Erfindung weist wenigstens eines der Rastelemente mindestens zwei Stufen auf, die in Richtung der Längsachse voneinander beabstandet sind. Dies ist besonders vorteilhaft, weil damit bereits mit einer geringen Anzahl von derartigen Rastelementen bereits erhebliche Wandstärkeunterschiede von Gehäusen ausgeglichen werden können.

Des Weiteren ist es vorteilhaft, wenn mindestens zwei der Rastelemente die gleiche Länge aufweisen. Die mindestens zwei gleich langen Rastelemente ermöglichen, dass sich der Sensor an mindestens zwei Stellen gut in der Wand des Gehäuses abstützen und damit stabil in dieser angeordnet werden kann.

Besonders bevorzugt ist, wenn zwei der Rastelemente bezogen auf die Längsachse einander gegenüber liegen. Bei einer derartigen symmetrischen Anordnung der Rastelemente bezüglich der Längsachse ist eine besonders stabile Befestigung des rastbaren Sensors in der Wand des Gehäuses möglich.

Besonders vorteilhaft ist, wenn drei der Rastelemente bezogen auf die Längsachse zueinander einen Winkelabstand von je 120 Grad aufweisen. Bei einem derartigen Sensor mit einer zentralsymmetrischen Anordnung der Rastelemente lässt sich eine besonders stabile Arretierung des Sensors in der Wand des Gehäuses erreichen.

Des weiteren ist bevorzugt, wenn der Sensor wenigstens zwei Gruppen von Rastelementen aufweist und jedes zu der ersten Gruppe gehörige Rastelement eine Stufe aufweist, wobei die Stufen der Rastelemente der ersten Gruppe jeweils in ersten Ebenen liegen, und jedes zur zweiten Gruppe gehörige Rastelement eine Stufe aufweist, wobei die Stufen der Rastelemente der zweiten Gruppe jeweils in zweiten Ebenen liegen, wobei die erste Ebenen in Richtung der Längsachse von den zweiten Ebenen beabstandet sind.

Besonders vorteilhaft ist, wenn die Anzahl der Rastelemente der ersten Gruppe gleich der Anzahl der Rastelemente der zweiten Gruppe ist, die Rastelemente der ersten Gruppe voneinander gleiche Winkelabstände bezogen auf die Längsachse und die Rastelemente der zweiten Gruppe zueinander gleiche Winkelabstände bezogen auf die Längsachse aufweisen. Damit ist es möglich, zwei jeweils symmetrisch in Ebenen angeordnete Gruppen von Rastelementen auszubilden. Die Stufen der ersten Ebenen bilden jeweils erste Rastebenen, die Stufen der zweiten Ebenen jeweils zweite Rastebenen für den Sensor aus. Damit lässt sich sowohl in den ersten Ebenen als auch in den zweiten Ebenen eine stabile Arretierung des Sensors in der Wand des Gehäuses erreichen.

In einer weiteren besonders bevorzugten Ausführungsform der Erfindung weisen die Rastelemente in der ersten Gruppe und die Rastelemente in der zweiten Gruppe zueinander gleiche Winkelabstände bezogen auf die Längsachse auf. Damit ist die Ausbildung eines hochgradig symmetrischen Verbunds von Rastelementen in den ersten und/oder zweiten Ebenen erreichbar. Es lässt sich damit eine besonders stabile Arretierung des Sensors in der Wand des Gehäuses erreichen, ohne dass sich die Rastelemente der verschiedenen Ebenen gegenseitig behindern.

Des Weiteren kann der Sensor mindestens ein teilweise außerhalb der Rastelemente umlaufendes Federelement aufweisen, das unter einer axial wirkenden Kraft elastisch verformbar ist. Damit können Sensoren in Gehäusen verschiedener Wandstärke sicher zwischen einer der Stufen eines Rastelements und dem Federelement arretiert werden.

Das Rastelement kann bevorzugt an einem vom Sensorkörper abgewandten Endabschnitt keilförmig ausgebildet sein. Damit ist ein einfaches und sicheres Eingreifen des Rastelements in die Ausnehmung des Gehäuses möglich. Vorteilhafte Ausgestaltungen der Erfindungen sind nachfolgend anhand der schematischen Zeichnungen näher erläutert. Es zeigen:
- Figur 1: eine perspektivische Ansicht eines rastbaren Sensors zum Einrasten in eine Ausnehmung eines Gehäuses,
- Figur 2: eine Ansicht des Sensors der Figur 1 in Richtung II-II' der Figur 1, und
- Figuren 3a, 3b: eine Seitenansicht und eine Aufsicht von einem Ausschnitt aus dem Gehäuse mit der Ausnehmung, in die der rastbare Sensor eingesteckt wird.

Elemente gleicher Konstruktion oder Funktion sind figurenübergreifend mit den gleichen Bezugszeichen gekennzeichnet.

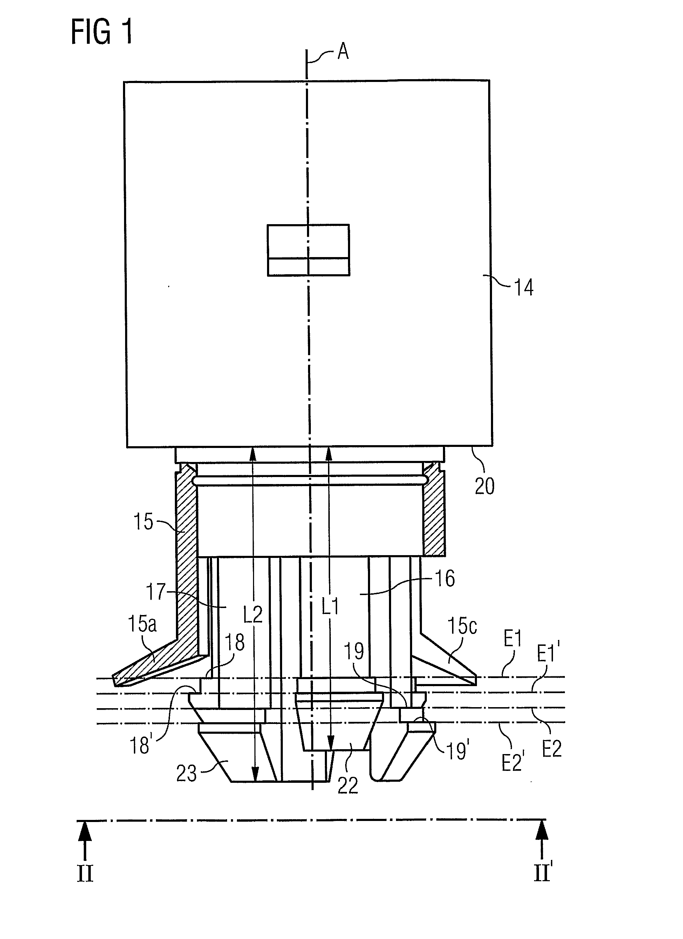

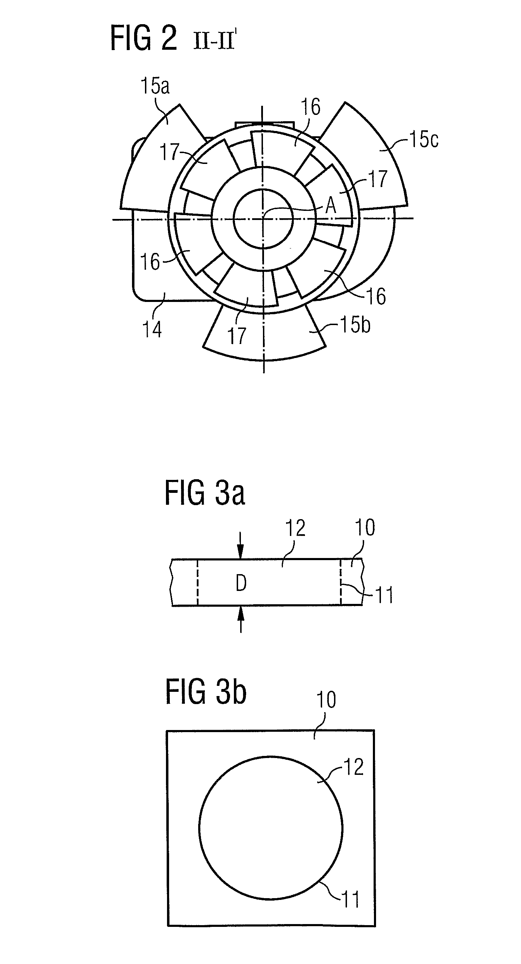

Der in Figur 1 dargestellte rastbare Sensor ist zum Einrasten in eine mit einem Rand 11 versehene Ausnehmung 12 eines Gehäuses 10 (Figuren 3a, 3b) vorgesehen. Der Sensor weist einen Sensorkörper 14 mit einem Fußabschnitt 20 auf, an dem ein Federelement 15 und Rastelemente 16, 17 angeordnet sind. Diese erstrecken sich in Richtung einer Längsachse A. Die Rastelemente 16 einer ersten Gruppe erstrecken sich in Richtung der Längsachse A über eine Länge L1, die Rastelemente 17 einer zweiten Gruppe erstrecken sich in Richtung einer Längsachse A über eine Länge L2. Die Rastelemente 16 haben einen von dem Sensorkörper 14 abgewandten Endabschnitt 22, die Rastelemente 17 haben einen von dem Sensorkörper 14 abgewandten Endabschnitt 23. Die Endabschnitte 22, 23 weisen eine Schräge auf, durch die die Endabschnitte 22, 23 keilförmig ausgebildet sind. Damit können die Rastelemente 16, 17 besonders einfach in die Ausnehmung 12 des Gehäuses 10 eingreifen.

Die Rastelemente 16, 17 weisen Stufen 18, 18', 19, 19' auf, wobei hier jedes der Rastelemente 16, 17 mit zwei Stufen dargestellt ist. Die Rastelemente 16, 17 bilden zwei Gruppen aus, wobei jedes zur ersten Gruppe gehörige Rastelement 16 zwei Stufen 18, 18' aufweist. Die Stufen 18 der Rastelemente 16 der ersten Gruppe liegen in einer ersten Ebene E1, die Stufen 18' der Rastelemente 16 der ersten Gruppe liegen in einer weiteren ersten Ebene E1'. Die Stufen 19 der Rastelemente 17 der zweiten Gruppe liegen in einer zweiten Ebene E2, die Stufen 19' der Rastelemente 17 der zweiten Gruppe liegen in einer weiteren zweiten Ebenen E2'. Erste Ebenen E1, E1' und zweite Ebenen E2, E2' sind zueinander in Richtung der Längsachse A beabstandet, so dass insgesamt vier Ebenen E1, E1', E2, E2' ausgebildet sind, in denen eine Verrastung des Sensors in dem Gehäuse 10 erfolgen kann.

Wie in Figur 2 zu sehen ist, sind in dem hier dargestellten Ausführungsbeispiel die drei Rastelemente 16 der ersten Gruppe so angeordnet, dass sie zueinander gleiche Winkelabstände bezogen auf die Längsachse A aufweisen und die drei Rastelemente 17 der zweiten Gruppe so angeordnet, dass sie zueinander gleiche Winkelabstände bezogen auf die Längsachse A aufweisen. Diese Winkelabstände betragen für beide Gruppen jeweils 120 Grad. Die drei Rastelemente 17 der zweiten Gruppe liegen dabei in den Lücken, die die drei Rastelemente 16 der ersten Gruppe bilden. Da die Rastelemente 16 der ersten Gruppe beziehungsweise die Rastelemente 17 der zweiten Gruppe des weiteren jeweils einen gleichen Abstand in radialer Richtung von der Längsachse A aufweisen, ist eine besonders stabile, zentralsymmetrische Anordnung der Rastelemente 16, 17 gegeben, die eine besonders stabile Verbindung zwischen dem rastbaren Sensor und dem Gehäuse 10 ermöglicht.

Wie in Figur 2 zu sehen ist, weist das Federelement 15 drei sich in radialer Richtung bezogen auf die Längsachse A erstreckende Federelementzungen 15a, 15b, 15c mit gleichem radialen Abstand auf, die in einem Winkelabstand von je 120 Grad bezüglich der Längsachse A zueinander angeordnet sind. Diese Anordnung ermöglicht es, dass der Sensor durch das Zusammenwirken des Federelements 15 mit den jeweiligen Stufen 18, 18', 19, 19' der Rastelemente 16, 17 sicher in einer Ausnehmung 12 des Gehäuses 10 befestigt werden kann.

Im Folgenden soll kurz die Funktionsweise des Einsetzens des rastbaren Sensors in das Gehäuse 10 erläutert werden:
Beim Einsetzen des Sensors in die Ausnehmung 12 des Gehäuses 10 werden die Rastelemente 16, 17 in Richtung der Längsachse A in die Ausnehmung 12 eingeschoben. Die Endabschnitte 22, 23 der Rastelemente 16, 17 liegen zu Beginn des Einschiebevorgangs an dem Rand 11 der Ausnehmung 12 an, bevor sie durch die keilförmige Ausbildung der Endabschnitte 22, 23 der Rastelemente 16, 17 in Richtung auf die Längsachse A hin radial nach innen bewegt werden, bis die Rastelemente 16, 17 so weit in die Ausnehmung 11 eingeführt sind, dass die Stufen 19' der Ebene E2' über den Rand 11 elastisch radial nach außen zurückfedern. Während des Einschiebens der Rastelemente 16, 17 in Richtung der Längsachse A in die Ausnehmung 12 werden auch die Federelementzungen 15a, 15b, 15c in Richtung der Längsachse A verformt. Weist die Wand des Gehäuses 10, wie in Figur 3a dargestellt, eine Dicke D auf, so kann der Sensor nicht mehr weiter in die Ausnehmung 12 eingeschoben werden und die Stufen 19' der Ebene E2' in Verbindung mit den Federelementzungen 15a, 15b, 15c bewirken eine Arretierung des rastbaren Sensors in dem Gehäuse 10.

Ist die Dicke D der Wand des Gehäuses 10 geringer als in Figur 3a dargestellt, so kann der rastbare Sensor weiter in die Ausnehmung 12 des Gehäuses 10 eingeschoben werden. Beträgt die Dicke D der Wand des Gehäuses 10 beispielsweise die Hälfte der Dicke D der Wand in Figur 3a, so kann der rastbare Sensor so weit in die Ausnehmung 12 eingeschoben werden, dass der Rand 11 mit den Stufen 18' der Ebene E1' der Rastelemente 16 zusammenwirken kann. Durch das Zusammenwirken der Stufen 18' der Ebene E1' des Rastelements 16 mit den Federelementzungen 15a, 15b, 15c wird eine sichere Arretierung des Sensors im Gehäuse 10 erreicht.

Bei einer noch geringeren Dicke D der Wand des Gehäuses 10, zum Beispiel einem Zehntel der Dicke D der Wand des Gehäuses 10 der Figur 3a, können die Rastelemente 16, 17 noch weiter in die Ausnehmung 12 des Gehäuses 10 eingeschoben werden, bis der Rand 11 mit den Stufen 18 der Ebene E1 der Rastelemente 16 zusammenwirken kann, so dass die Stufen 18 der Ebene E1 der Rastelemente 16 und die Federelementzungen 15a, 15b, 15c zusammen eine feste Arretierung des Sensors im Gehäuse 10 ermöglichen.

### Bezugszeichenliste

- 10: Gehäuse
- 11: Rand
- 12: Ausnehmung
- 14: Sensorkörper
- 15: Federelement
- 15a, 15b, 15c: Federelementzunge
- 16, 17: Rastelement
- 18, 18', 19, 19': Stufe
- 20: Fußabschnitt des Sensorkörpers
- 22, 23: Endabschnitt des Rastelements
- A: Längsachse
- D: Dicke der Gehäusewand
- L1, L2: erste, zweite Länge des Rastelements
- E1, E1', E2, E2': erste, zweite Ebene

## Patentansprüche

1. Rastbarer Sensor zum Einrasten in die Ausnehmung (12) eines Gehäuses (10), mit
- einem Sensorkörper (14),
- Rastelementen (16, 17), die an dem Sensorkörper (14) angeordnet sind und sich in Richtung einer Längsachse (A) über eine Länge (L1, L2) erstrecken,
wobei die Rastelemente (16, 17) Stufen (18, 18', 19, 19') aufweisen, und mindestens zwei Stufen (18, 18', 19, 19') in Richtung der Längsachse (A) voneinander beabstandet angeordnet sind **dadurch gekennzeichnet, dass** mindestens zwei der Rastelemente (16, 17) verschiedene Längen (L1, L2) aufweisen.

2. Sensor nach Anspruch 1, wobei jedes Rastelement (16, 17) mindestens eine Stufe (18, 18', 19, 19') aufweist.

3. Sensor nach einem der vorhergehenden Ansprüche, wobei wenigstens eines der Rastelemente (16, 17) mindestens zwei Stufen (18, 18', 19, 19') aufweist, die in Richtung der Längsachse (A) voneinander beabstandet sind.

4. Sensor nach einem der vorhergehenden Ansprüche, wobei mindestens zwei der Rastelemente (16, 17) die gleiche Länge (L1, L2) aufweisen.

5. Sensor nach einem der vorhergehenden Ansprüche, wobei zwei der Rastelemente (16, 17) bezogen auf die Längsachse (A) einander gegenüberliegen.

6. Sensor nach einem der vorhergehenden Ansprüche, wobei drei der Rastelemente (16, 17) bezogen auf die Längsachse (A) zueinander einen Winkelabstand von je 120° aufweisen.

7. Sensor nach einem der vorhergehenden Ansprüche, wobei der Sensor wenigstens zwei Gruppen von Rastelementen (16, 17) aufweist und jedes zur ersten Gruppe gehörige Rastelement (16) eine Stufe (18, 18') aufweist, wobei die Stufen (18, 18') der Rastelemente (16) der ersten Gruppe jeweils in ersten Ebenen (E1, E1') liegen, und jedes zur zweiten Gruppe gehörige Rastelement (17) eine Stufe (19, 19') aufweist, wobei die Stufen (19, 19') der Rastelemente (17) der zweiten Gruppe jeweils in zweiten Ebenen (E2, E2') liegen, wobei die ersten Ebenen (E1, E1') in Richtung der Längsachse (A) von den zweiten Ebenen (E2, E2') beabstandet sind.

8. Sensor nach Anspruch 7, wobei die Anzahl der Rastelemente (16) der ersten Gruppe gleich der Anzahl der Rastelemente (17) der zweiten Gruppe ist, die Rastelemente (16) der ersten Gruppe zueinander gleiche Winkelabstände bezogen auf die Längsachse (A) und die Rastelemente (17) der zweiten Gruppe zueinander gleiche Winkelabstände bezogen auf die Längsachse (A) aufweisen.

9. Sensor nach Anspruch 7 oder 8, wobei die Rastelemente (16) der ersten Gruppe und die Rastelemente (17) der zweiten Gruppe zueinander gleiche Winkelabstände bezogen auf die Längsachse (A) aufweisen.

10. Sensor nach einem der vorhergehenden Ansprüche, der ein mindestens teilweise außerhalb der Rastelemente (16, 17) umlaufendes Federelement (15) aufweist, das unter einer axial wirkenden Kraft elastisch verformbar ist.

11. Sensor nach einem der vorhergehenden Ansprüche, wobei das Rastelement (16, 17) an einem vom Sensorkörper (14) abgewandten Endabschnitt (22, 23) keilförmig ausgebildet ist.

## Claims

1. Latchable sensor for latching into the recess (12) in a housing (10), comprising
- a sensor body (14),
- latching elements (16, 17) which are arranged on the sensor body (14) and extend over a length (L1, L2) in the direction of a longitudinal axis (A),
wherein the latching elements (16, 17) have steps (18, 18', 19, 19'), and
at least two steps (18, 18', 19, 19') are arranged in a manner spaced apart from one another in the direction of the longitudinal axis (A),
**characterized in that**
at least two of the latching elements (16, 17) have different lengths (L1, L2).

2. Sensor according to Claim 1, wherein each latching element (16, 17) has at least one step (18, 18', 19, 19').

3. Sensor according to either of the preceding claims, wherein at least one of the latching elements (16, 17) has at least two steps (18, 18', 19, 19') which are spaced apart from one another in the direction of the longitudinal axis (A).

4. Sensor according to one of the preceding claims, wherein at least two of the latching elements (16, 17) have the same length (L1, L2).

5. Sensor according to one of the preceding claims, wherein two of the latching elements (16, 17) are situated opposite one another with respect to the longitudinal axis (A).

6. Sensor according to one of the preceding claims, wherein three of the latching elements (16, 17) are at an angular distance of in each case 120° in relation to one another with respect to the longitudinal axis (A).

7. Sensor according to one of the preceding claims, wherein the sensor has at least two groups of latching elements (16, 17), and each latching element (16) which belongs to the first group has a step (18, 18'), wherein the steps (18, 18') of the latching elements (16) of the first group each lie in first levels (E1, E1'), and each latching element (17) which belongs to the second group has a step (19, 19'), wherein the steps (19, 19') of the latching elements (17) of the second group each lie in second levels (E2, E2'), wherein the first levels (E1, E1') are spaced apart from the second levels (E2, E2') in the direction of the longitudinal axis (A).

8. Sensor according to Claim 7, wherein the number of latching elements (16) of the first group is equal to the number of latching elements (17) of the second group, the latching elements (16) of the first group are at identical angular distances in relation to one another with respect to the longitudinal axis (A), and the latching elements (17) of the second group are at identical angular distances in relation to one another with respect to the longitudinal axis (A).

9. Sensor according to Claim 7 or 8, wherein the latching elements (16) of the first group and the latching elements (17) of the second group are at identical angular distances in relation to one another with respect to the longitudinal axis (A).

10. Sensor according to one of the preceding claims, which has a spring element (15) which at least partially surrounds the outside of the latching elements (16, 17) and can be elastically deformed under an axially acting force.

11. Sensor according to one of the preceding claims, wherein the latching element (16, 17) is designed in the form of a wedge at an end section (22, 23) which faces away from the sensor body (14).

## Revendications

1. Capteur encliquetable pour l'encliquetage dans l'évidement (12) d'un carter (10), avec :
- un corps de capteur (14) ;
- des éléments d'encliquetage (16, 17) disposés au niveau du corps de capteur (14) et s'étendant sur toute la longueur (L1, L2) en direction d'un axe longitudinal (A) ;
les éléments d'encliquetage (16, 17) comportant des paliers (18, 18', 19, 19') ; et
au moins deux paliers (18, 18', 19, 19') étant disposés à une certaine distance l'un de l'autre dans la direction de l'axe longitudinal (A) ;
**caractérisé en ce que** :
au moins deux des éléments d'encliquetage (16, 17) présentent des longueurs (L1, L2) différentes.

2. Capteur selon la revendication 1, chaque élément d'encliquetage (16, 17) comportant au moins un palier (18, 18', 19, 19').

3. Capteur selon l'une quelconque des revendications précédentes, au moins un des éléments d'encliquetage (16, 17) comportant au moins deux paliers (18, 18', 19, 19') placés à une certaine distance l'un de l'autre dans la direction de l'axe longitudinal (A).

4. Capteur selon l'une quelconque des revendications précédentes, au moins deux des éléments d'encliquetage (16, 17) présentant la même longueur (L1, L2).

5. Capteur selon l'une quelconque des revendications précédentes, deux des éléments d'encliquetage (16, 17) étant placés face à face par rapport à l'axe longitudinal (A).

6. Capteur selon l'une quelconque des revendications précédentes, trois des éléments d'encliquetage (16, 17) présentant une distance angulaire de respectivement 120° par rapport à l'axe longitudinal (A).

7. Capteur selon l'une quelconque des revendications précédentes, le capteur comportant au moins deux groupes d'éléments d'encliquetage (16, 17) et chaque élément d'encliquetage (16) appartenant au premier groupe comportant un palier (18, 18'), les paliers (18, 18') des éléments d'encliquetage (16) du premier groupe reposant respectivement dans des premiers plans (E1, E1') et chaque élément d'encliquetage (17) appartenant au deuxième groupe comportant un palier (19, 19'), les paliers (19, 19') des éléments d'encliquetage (17) du deuxième groupe reposant respectivement dans des deuxièmes plans (E2, E2'), les premiers plans (E1, E1') étant placés à une certaine distance des deuxièmes plans (E2, E2') dans la direction de l'axe longitudinal (A).

8. Capteur selon la revendication 7, le nombre des éléments d'encliquetage (16) du premier groupe étant égal au nombre d'éléments d'encliquetage (17) du deuxième groupe, les éléments d'encliquetage (16) du premier groupe comportant des écarts angulaires identiques les uns par rapport aux autres par rapport à l'axe longitudinal (A) et les éléments d'encliquetage (17) du deuxième groupe présentant des écarts angulaires égaux les uns par rapport aux autres par rapport à l'axe longitudinal (A).

9. Capteur selon la revendication 7 ou 8, les éléments d'encliquetage (16) du premier groupe et les éléments d'encliquetage (17) du deuxième groupe comportant des écarts angulaires égaux les uns par rapport aux autres par rapport à l'axe longitudinal (A).

10. Capteur selon l'une quelconque des revendications précédentes, ledit capteur comportant au moins un élément de ressort (15) tournant au moins en partie à l'extérieur des éléments d'encliquetage (16, 17), ledit élément étant déformable de façon élastique sous l'exercice d'une force axiale.

11. Capteur selon l'une quelconque des revendications précédentes, l'élément d'encliquetage (16, 17) étant réalisé en forme de clavette au niveau d'une section d'extrémité (22, 23) opposée par rapport au corps de capteur (14).
